# FASCICULE DE BREVET EUROPEEN

(11) **EP 4 448 423 B1**
(45) Date de publication et mention de la délivrance du brevet: **29.10.2025**
(21) Numéro de dépôt: 22835330.6
(22) Date de dépôt: 09.12.2022
(51) Int. Cl.: B65G 21/06, B65G 39/12, B65G 15/08

(54) **DISPOSITIF DE GUIDAGE LATERAL D'UNE BANDE TRANSPORTEUSE SANS FIN DE CONVOYEUR AUGE**
VORRICHTUNG ZUR SEITLICHEN FÜHRUNG EINES ENDLOSEN FÖRDERBANDES EINES TROGFÖRDERERS
LATERAL GUIDING DEVICE FOR AN ENDLESS CONVEYOR BELT OF A TROUGH CONVEYOR

(30) Priorité: 19.12.2021 FR 2113938
(43) Date de publication de la demande: 23.10.2024
(73) Titulaire: SOCIETE FINANCIERE DE GESTION, 59100 Roubaix (FR)
(72) Inventeur: ALTIMARI, Samuel, 59390 Toufflers (FR); BENARD, Olivier, 76450 Auberville La Manuel (FR)
(74) Mandataire: Matkowska, Franck
(86) Numéro de dépôt international: PCT/EP2022/085220
(87) Numéro de publication internationale: WO 2023/110676

(56) Documents cités:
- FR-A1- 3 037 051
- JP-B2- 5 451 200
- KR-A- 20150 136 928
- US-A- 1 530 499
- US-A1- 2004 079 621
- US-A1- 2007 170 044
- US-B1- 6 427 828

## Description

### Domaine technique

La présente invention concerne le domaine technique des « convoyeurs auge » comportant une bande transporteuse sans fin, qui est déformable de manière à former une auge. Dans ce domaine technique, l'invention concerne plus particulièrement le guidage latéral de la bande transporteuse en forme d'auge.

### Art antérieur

Les convoyeurs auge sont connus et utilisés depuis de très nombreuses années pour le transport « de vrac », c'est-à-dire pour transporter d'un point à l'autre tout type de produits ou objets en vrac ou tout type de matériaux en vrac. L'intérêt de la forme en auge est d'éviter que les objets, produits ou matériaux en vrac ne quittent latéralement la bande transporteuse pendant leur convoyage.

Une bande transporteuse sans fin d'un convoyeur auge est déformable de manière à former une auge. C'est le cas, par exemple dans les convoyeurs auge décrits dans les publications US 2,695, 701 et US 4,720,005 et US 6,269,994.

Pour guider le brin de transport supérieur de la bande transporteuse sans fin d'un convoyeur auge, il existe deux types de rouleau de guidage rotatif, de type rouleau fou.

Un premier type de rouleau de guidage décrit par exemple dans la demande de brevet européen EP 1 564 166 est un rouleau de guidage, qui est horizontal et positionné de manière centrale sous le brin de transport supérieur de la bande transporteuse, l'axe de rotation du rouleau étant perpendiculaire à l'axe longitudinal de convoyage du convoyeur. Dans la demande de brevet européen EP 1 564 166, ce rouleau de guidage est escamotable par rotation, entre une position dans laquelle il supporte et guide la bande transporteuse et une position escamotée dans laquelle il n'est plus au contact de la bande transporteuse.

Un deuxième type de rouleau de guidage fou, décrit par exemple dans les convoyeurs auge des publications US 2,695, 701 et US 4,720,005 et US 6,269,994 susvisées, est un rouleau de guidage latéral, qui est incliné ou inclinable d'un angle plus ou moins important, et qui permet un guidage latéral d'une des deux parties latérales relevées de l'auge formée par le brin supérieur de la bande transporteuse. Plus l'inclinaison de ce type de rouleau de guidage est importante, et plus la profondeur de l'auge formée par la bande transporteuse est importante, ce qui en pratique permet de transporter un volume de vrac plus important par mètre linéaire.

Généralement, le rouleau de guidage est monté de manière démontable sur un support afin de pouvoir en assurer la maintenance.

Lorsque la bande transporteuse sans fin d'un convoyeur auge est déformable de manière à former une auge, ces rouleaux de guidage ont non seulement une fonction de guidage latéral mais également, en fonction de leur positionnement sur le trajet de la bande transporteuse, une de fonction de mise en auge ou de maintien en auge.

Les rouleaux de guidage permettant une mise en auge sont montés dans une station amont du convoyeur, dans laquelle ils supportent et guident la bande transporteuse en la déformant depuis sa forme initiale (non contrainte) sensiblement plate jusqu'à sa forme en auge finale en sortie de la station de mise en auge.

Les termes « amont » et « aval » se définissent ici par rapport à la direction de déplacement du brin supérieur de la bande transporteuse.

Les rouleaux de guidage latéral qui sont positionnés sur le trajet de la bande transporteuse en aval de la station de mise en auge, permettent quant à eux de remplir une fonction de guidage et de simple maintien en forme d'auge de la bande transporteuse.

Dans certains cas, un rouleau de guidage horizontal du premier type susvisé peut être intercalé entre deux rouleaux de guidage latéral d'une paire. Dans d'autres réalisations, il est possible de ne pas mettre de rouleau de guidage du premier type entre deux rouleaux de guidage latéral.

Ceci ayant été exposé, dans un convoyeur auge, une fois que la bande transporteuse est montée, le démontage d'un rouleau de guidage latéral de son support ainsi que son montage sont compliqués et très fastidieux à cause de la pression que la bande transporteuse exerce sur le rouleau de guidage, du fait de sa mise en tension, et ce même en l'absence de vrac sur la bande transporteuse. Cette pression est d'autant plus forte et problématique que la bande transporteuse est déformée ou est maintenue déformée par le rouleau de guidage. Le document JP 5 451200 B2 divulgue un dispositif de guidage latéral d'une bande transporteuse sans fin d'un convoyeur auge, le dispositif comportant un support et un rouleau de guidage fou, qui est apte à être monté de manière démontable sur le support, entre une première partie permettant de supporter une extrémité de l'axe du rouleau à un point haut et une deuxième partie permettant de supporter l'autre extrémité de l'axe du rouleau à un point bas, dans lequel la première partie du support est mobile entre une position opérationnelle et une position escamotée, et le dispositif de guidage latéral comporte un moyen de verrouillage, qui permet de verrouiller la première partie dans ladite position opérationnelle.

Ainsi, à ce jour, pour procéder au montage ou au démontage d'un rouleau de guidage latéral sans devoir détendre la bande, au moins une personne doit réduire la pression exercée par la bande transporteuse sur le rouleau de guidage, par exemple en écartant la bande transporteuse du rouleau de guidage au moyen d'une barre utilisée comme levier, pendant qu'une autre personne procède au montage ou démontage du rouleau de guidage latéral. Outre la difficulté de l'opération, on peut souligner qu'on mobilise au moins deux personnes pour le montage ou démontage, et l'opération de montage/démontage occasionne des risques d'accidents.

Dans certains cas, la pression exercée par bande transporteuse sur le rouleau guidage est trop importante et oblige de manière préjudiciable à procéder au démontage complet du dispositif (support et rouleau de guidage latéral) et/ou à diminuer la tension de la bande transporteuse.

Un autre problème réside dans la difficulté rencontrée pour accéder à un rouleau de guidage latéral, lors d'une opération de démontage. Cette difficulté est encore augmentée du fait de la présence généralement obligatoire d'une protection de point entrant.

On a par ailleurs déjà essayé de faciliter le démontage ou le montage de rouleau de guidage latéral sur un convoyeur auge en proposant d'utiliser une enveloppe gonflable que l'on interpose entre la bande transporteuse et un point d'appui à proximité du rouleau de guidage, et que l'on gonfle pour écarter la bande transporteuse du rouleau de guidage.

Cette solution peut au premier abord paraître séduisante, mais elle engendre d'autres inconvénients. En particulier, il peut être difficile d'accéder à un point d'appui qui convient à la mise en œuvre de cette enveloppe gonflable. Au surplus et surtout avec cette solution, on contraint chaque équipe de maintenance de s'équiper avec un équipement supplémentaire (compresseur et enveloppe gonflable encombrante), qui doit être transporté jusqu'au convoyeur auge à chaque opération de maintenance d'un rouleau de guidage latéral.

On a par ailleurs également proposé dans le brevet japonais JP 5 451200 ou dans la demande de brevet coréen KR 2015 0136928 une solution technique mettant en œuvre un support amélioré pour rouleau de guidage latéral dans un convoyeur auge. Ce support amélioré comporte un bras pivotant, qui permet dans une position opérationnelle de supporter le rouleau de guidage latéral à un point haut et qui est mobile en rotation entre ladite position opérationnelle et une position escamotée.

Dans la solution technique décrite dans le brevet japonais JP 5 451200 ou dans la demande de brevet coréen KR 2015 0136928, pour escamoter ledit bras pivotant, dans un premier temps on déplace vers le haut le rouleau de guidage latéral pour le dégager de ce bras pivotant, afin dans un deuxième temps de pouvoir escamoter le bras pivotant en le faisant pivoter vers le bas. Les opérations de manutention du rouleau de guidage lors de son montage ou de son démontage restent ainsi fastidieuses et sources d'accidents et mobilisent en pratique au moins deux personnes.

Au surplus, tel que précédemment souligné, la bande transporteuse exerce sur le rouleau de guidage une pression importante du fait de sa mise en tension, et ce même en l'absence de vrac sur la bande transporteuse, et de ce fait rend très difficile ledit déplacement du rouleau de guidage latéral vers le haut. Il en résulte en pratique de manière désavantageuse que le démontage ou le montage du rouleau de guidage latéral doit être réalisé en l'absence de bande transporteuse ou en présence d'une bande transporteuse qui doit être suffisamment détendue.

### Objectif de l'invention

Un objectif de l'invention est de proposer une nouvelle solution technique, qui permet de complètement simplifier les opérations de montage et démontage d'un rouleau de guidage latéral dans un convoyeur auge, en présence d'une bande transporteuse sans fin qui exerce une pression sur le rouleau de guidage latéral, tout en évitant la mise en œuvre d'un équipement spécifique supplémentaire pour procéder au montage/démontage du rouleau de guidage latéral.

### Résumé de l'invention

Cet objectif est atteint au moyen d'un dispositif de guidage latéral d'une bande transporteuse sans fin d'un convoyeur auge, dont le support du rouleau de guidage a été amélioré.

Selon un premier aspect, l'invention a ainsi pour objet un dispositif de guidage latéral qui comporte, de manière connue dans l'art antérieur, un support et un rouleau de guidage fou, qui est apte à être monté de manière démontable sur le support, entre une première partie permettant, dans une position opérationnelle, de supporter une première extrémité de l'axe du rouleau à un point haut et une deuxième partie permettant de supporter une deuxième extrémité de l'axe du rouleau à un point bas ; la première partie du support est mobile entre ladite position opérationnelle et une position escamotée ; le dispositif de guidage latéral comporte un moyen de verrouillage, qui permet de verrouiller la première partie dans ladite position opérationnelle ; une fois la première partie verrouillée dans ladite position opérationnelle et le rouleau monté sur le support, la première partie peut être déverrouillée et peut être complètement dégagée de la première extrémité de l'axe du rouleau et être amenée jusque dans ladite position escamotée.

De manière caractéristique selon l'invention, le support comporte un élément de retenue, qui a pour fonction, lorsque la première partie du support est amenée en position escamotée et ne supporte pas le rouleau, de retenir verticalement le rouleau dans une position de démontage dans laquelle la deuxième extrémité de l'axe du rouleau est supportée au point bas par la deuxième partie du support.

De manière facultative selon l'invention, le dispositif de guidage latéral de l'invention peut également comporter les caractéristiques techniques optionnelles ci-après, prises isolément ou en combinaison :
- Lorsque la première partie du support est amenée en position escamotée et ne supporte pas le rouleau, le rouleau est apte à pivoter vers le bas par gravité, en étant supporté au point bas par la deuxième partie du support, et l'élément de retenue a pour fonction de retenir verticalement le rouleau dans ladite position de démontage lorsque le rouleau pivote vers le bas.
- La première partie du support n'est pas détachée du reste du support (i.e. reste attachée au reste du support) lorsqu'elle est escamotée.
- Dans ladite position escamotée de la première partie du support, le rouleau est complètement accessible axialement, et de préférence peut être retiré axialement de la deuxième partie du support.
- Le support comprend une articulation en rotation permettant le pivotement de la première partie du support entre ladite position opérationnelle et ladite position escamotée.
- L'articulation permet un pivotement de la première partie du support sur une plage angulaire d'au moins 60°.
- Le support comporte une troisième partie de liaison qui relie rigidement la première partie à la deuxième partie ; la première partie du support est mobile par rapport à cette troisième partie de liaison pour son déplacement entre ladite position opérationnelle et ladite position escamotée.
- L'articulation est entre la première partie du support et ladite troisième partie de liaison.
- le point haut et le point bas du support définissent un axe de support et l'axe de rotation de l'articulation de la première partie du support est horizontal et transversal à cet axe de support, et de préférence perpendiculaire à cet axe de support.
- L'élément de retenue est positionné sous le rouleau lorsque celui-ci est monté sur le support.
- L'élément de retenue est incliné vers le haut depuis son extrémité la plus proche de la deuxième partie, et de préférence a sensiblement la même inclinaison que le rouleau monté sur son support.
- L'élément de retenue est également adapté pour maintenir latéralement le rouleau de guidage dans sa position de démontage.
- L'élément de retenue comporte une paroi de retenue qui est positionnée sous le rouleau, lorsque celui-ci est monté sur le support.
- L'élément de retenue comporte deux parois de maintien latéral qui forment, avec la paroi de retenue, une cuvette de retenue et de maintien latéral du rouleau dans sa position de démontage.
- Dans sa position de démontage le rouleau est maintenu incliné vers le haut depuis son point bas.
- Le point bas et le point haut de support définissent un axe de support, et l'angle (α) de basculement vers le bas du rouleau dans sa position de démontage par rapport à cet axe de support est strictement supérieur à 0° et inférieur ou égal à 45°, et de préférence entre 5° et 20°.
- Le moyen de verrouillage comporte un écrou de serrage et un axe fileté fixé au support, ; la première partie comporte une ouverture traversante oblongue, qui est positionnée et orientée de telle sorte qu'elle permet le passage de l'axe fileté à travers la première partie lorsque celle-ci est amenée dans ladite position opérationnelle.
- Le dispositif comporte au moins une protection de point entrant qui est fixée à une partie fixe du support, de préférence de manière démontable, et qui empêche d'accéder au rouleau par au moins un de ses deux côtés principaux, ladite protection de point entrant comportant de préférence une plaque de type rectangulaire dont la largeur est supérieure au diamètre du rouleau, et dont la longueur est supérieure à la longueur du rouleau.
- Le support comporte un élément d'appui fixe et le moyen de verrouillage permet un serrage de la première partie contre cet élément d'appui fixe.
- L'élément d'appui fixe comporte un élément de centrage, qui est apte à coopérer avec un élément de centrage complémentaire de la première partie du support, de manière à centrer la première partie du support lorsqu'elle est amenée dans ladite position opérationnelle et est verrouillée en étant serrée contre l'élément d'appui fixe.
- L'élément d'appui comporte une plaque d'appui, dont un bord d'appui comporte un élément de centrage mâle et la première partie du support comporte une ouverture de centrage traversante, de préférence de forme oblongue, qui est dimensionnée et orientée par rapport à l'élément de centrage mâle, de telle sorte qu'au cours du déplacement de la première partie du support de sa position escamotée jusque dans sa position opérationnelle, cette ouverture de centrage se positionne en vis-à-vis de l'élément de centrage mâle, et l'élément de centrage mâle passe à travers l'ouverture de centrage et permet de guider et centrer la première partie du support jusque dans sa position opérationnelle en appui sur le bord d'appui de la plaque d'appui.
- La première partie du support est adaptée pour être abaissée par rapport au rouleau, depuis ladite position opérationnelle dans laquelle elle supporte l'axe du rouleau, de manière à être complètement dégagée de l'extrémité de l'axe du rouleau, sans déplacer le rouleau vers le haut et en particulier sans faire pivoter le rouleau vers le haut.
- La première partie du support est adaptée pour être déplacée par rapport au rouleau jusqu'à une position escamotée dans laquelle la première partie du support n'est pas alignée avec l'extrémité de l'axe du rouleau.
- La première partie du support comporte un logement qui est adapté pour recevoir la première extrémité de l'axe du rouleau lorsque la première partie du support est en position opérationnelle et pour être complétement dégagé de la première extrémité de l'axe du rouleau, lorsque la première partie du support est déplacée par rapport au rouleau pour être amenée en position escamotée, sans déplacer le rouleau vers le haut et en particulier sans faire pivoter le rouleau vers le haut.
- Le logement est adapté pour permettre une insertion dans le logement par le haut de l'extrémité de l'axe du rouleau.
- Ledit logement est adapté pour être complétement dégagé de la première extrémité de l'axe du rouleau en abaissant la première partie du support par rapport au rouleau depuis sa position opérationnelle.
- Ledit logement a un profil en forme de U.
- La première partie du support comporte une plaque supérieure dans laquelle est réalisée une encoche formant ledit logement.
- La première partie du support est adaptée pour être déplacée vers le bas, depuis ladite position opérationnelle, en retenant verticalement le rouleau qui pivote vers le bas par gravité, jusqu'à ce que le rouleau soit bloqué verticalement dans sa position de démontage par l'élément de retenue.
- Le support comprend une articulation en rotation permettant le pivotement de la première partie du support entre ladite position opérationnelle et ladite position escamotée et l'articulation en rotation de la première partie du support est positionnée sous le rouleau entre la première extrémité et la deuxième extrémité de l'axe du rouleau, et de préférence à proximité de la première extrémité de l'axe du rouleau supportée par la première partie du support dans ladite position opérationnelle.
- La première partie du support comporte un bras principal qui est articulé en rotation et qui est incliné vers l'extérieur du rouleau et vers le haut par rapport à l'horizontal, au moins lorsque la première partie du support est en position opérationnelle.
- Le bras est articulé de manière à pouvoir pivoter vers le bas jusqu'à une position escamotée dans laquelle il est orienté sensiblement horizontalement.
- L'élément de retenue est fixe par rapport à la deuxième partie du support et la première partie du support est mobile par rapport à l'élément de retenue.
- La première partie du support est adaptée pour être complètement dégagée de la première extrémité de l'axe du rouleau en abaissant la première partie du support depuis ladite position opérationnelle dans laquelle elle supporte le rouleau, et sans déplacer le rouleau vers le haut, et en particulier sans faire pivoter le rouleau vers le haut.

L'invention a pour autre objet un procédé de démontage d'un rouleau de guidage fou du dispositif de guidage latéral susvisé, qui est monté au contact du brin supérieur d'une bande transporteuse en forme d'auge d'un convoyeur auge, le brin supérieur exerçant une pression sur le rouleau de guidage fou, et étant déformé localement ou maintenu déformé localement par ledit rouleau, ledit procédé comportant la succession d'étapes suivantes :
(a) on déverrouille la première partie du support ;
(b) on escamote cette première partie de manière à libérer l'extrémité de l'axe du rouleau au point haut, de telle sorte que le rouleau reste en appui à son autre extrémité au point bas du support et est retenu verticalement par l'élément de retenue du support dans une position de démontage,
(c) on retire le rouleau de son support, de préférence en le tirant dans sa direction axiale pour dégager complètement son extrémité au point bas de la deuxième partie du support.

De préférence à l'étape (b), le rouleau pivote vers le bas par gravité jusqu'à ce qu'il soit retenu verticalement par l'élément de retenue du support dans ladite position de démontage.

De préférence, à l'étape (b) l'escamotage de la première partie du support est réalisé de telle sorte que la première partie du support retient verticalement le rouleau, qui pivote vers le bas par gravité, jusqu'à ce que le rouleau soit bloqué verticalement dans sa position de démontage par l'élément de retenue.

De préférence, à l'étape (b) l'escamotage de la première partie du support est réalisé sans déplacer le rouleau vers le haut et en particulier sans faire pivoter le rouleau vers le haut.

L'invention a également pour objet un procédé de montage d'un rouleau de guidage fou du dispositif de guidage latéral susvisé, dont le support est déjà monté dans un convoyeur auge comportant une bande transporteuse en forme d'auge, qui est déformable pour sa mise en auge ou son maintien en auge, ledit procédé comportant la succession d'étapes suivantes :
(a) la première partie du support étant escamotée, on positionne le rouleau par rapport au support et on le déplace de manière à positionner une extrémité de l'axe du rouleau sur la deuxième partie du support, afin qu'elle soit supportée à un point bas, le rouleau étant retenu verticalement par l'élément de retenue du support ;
(b) on soulève le rouleau en le faisant pivoter vers le haut pour l'amener au contact du brin supérieur de la bande transporteuse ;
(c) on amène la première partie du support dans sa position opérationnelle et on la verrouille dans cette position ;
(d) on positionne l'autre extrémité de l'axe du rouleau sur la deuxième partie du support, afin qu'elle soit supportée à un point haut.

De préférence, à l'étape de montage (b), on fait pivoter vers le haut le rouleau, en utilisant un levier et en prenant l'élément de retenue comme point d'appui de ce levier.

Selon un deuxième aspect, l'invention a également pour objet un dispositif de guidage latéral d'une bande transporteuse sans fin d'un convoyeur auge, le dispositif comportant un support et un rouleau de guidage fou, qui est apte à être monté de manière démontable sur le support, entre une première partie permettant, dans une position opérationnelle, de supporter une première extrémité de l'axe du rouleau à un point haut et une deuxième partie permettant de supporter une deuxième extrémité de l'axe du rouleau à un point bas ; la première partie du support est mobile entre ladite position opérationnelle et une position escamotée dans laquelle la première partie du support est complètement dégagée de l'extrémité de l'axe du rouleau ; le dispositif de guidage latéral comporte un moyen de verrouillage, qui permet de verrouiller la première partie du support dans ladite position opérationnelle.

De manière caractéristique selon l'invention, le support comporte un élément d'appui fixe et le moyen de verrouillage permet un serrage de la première partie contre cet élément d'appui fixe ; l'élément d'appui fixe comporte un élément de centrage, qui est apte à coopérer avec un élément de centrage complémentaire de la première partie du support, de manière à centrer la première partie lorsqu'elle est amenée dans ladite position opérationnelle et est verrouillée en étant serrée contre l'élément d'appui fixe.

De manière facultative selon ce deuxième aspect de l'invention, le dispositif de guidage latéral peut également comporter les caractéristiques techniques optionnelles susvisées du dispositif de guidage latéral selon le premier aspect susvisé, lesquelles caractéristiques techniques optionnelles peuvent être prises isolément ou en combinaison.

L'invention a également pour objet un procédé de démontage d'un rouleau de guidage fou du dispositif de guidage latéral selon le deuxième aspect susvisé, qui est monté au contact du brin supérieur d'une bande transporteuse en forme d'auge d'un convoyeur auge, le brin supérieur exerçant une pression sur le rouleau de guidage fou, et étant déformé localement ou maintenu déformé localement par ledit rouleau, ledit procédé comportant la succession d'étapes suivantes :
(a) on déverrouille la première partie du support ;
(b) on escamote cette première partie de manière à libérer l'extrémité de l'axe du rouleau au point haut et à dégager l'élément de centrage de l'élément d'appui fixe, de l'élément de centrage complémentaire de la première partie du support ;
(c) on retire le rouleau de son support, de préférence en le tirant dans sa direction axiale pour dégager complètement son extrémité au point bas de la deuxième partie du support.

L'invention a également pour objet un procédé de montage d'un rouleau de guidage fou du dispositif de guidage latéral selon le deuxième aspect susvisé, dont le support est déjà monté dans un convoyeur auge comportant une bande transporteuse en forme d'auge, qui est déformable pour sa mise en auge ou son maintien en auge, ledit procédé comportant la succession d'étapes suivantes :
(a) la première partie du support étant escamotée, on positionne le rouleau par rapport au support et on le déplace de manière à positionner une extrémité de l'axe du rouleau sur la deuxième partie du support, afin qu'elle soit supportée à un point bas du support;
(b) on soulève le rouleau en le faisant pivoter vers le haut pour l'amener au contact du brin supérieur de la bande transporteuse ;
(c) on amène la première partie du support dans sa position opérationnelle en la centrant au moyen des éléments de centrage complémentaires et on la verrouille dans cette position ;
(d) on positionne l'autre extrémité de l'axe du rouleau sur la deuxième partie du support, afin qu'elle soit supportée à un point haut du support.

L'invention a pour autre objet un ensemble de guidage latéral d'une bande transporteuse sans fin d'un convoyeur auge, lequel ensemble définit un axe central de convoyage et comporte au moins une paire de dispositifs de guidage latéral, dans lequel au moins un premier dispositif est un dispositif de guidage latéral de l'invention et le deuxième dispositif de guidage latéral peut être ou non un dispositif de l'invention ; dans cet ensemble lesdits premier et deuxième dispositifs de guidage latéral sont positionnés de part et d'autre de l'axe central de convoyage, en étant écartés l'un de l'autre, le point bas du support du premier dispositif étant plus proche de cet axe central de convoyage que le point haut de son support.

De préférence, ledit deuxième dispositif est également un dispositif de guidage latéral de l'invention et le point bas du support du deuxième dispositif étant plus proche de cet axe central de convoyage que le point haut de son support.

De préférence, les deux dispositifs de guidage latéral sont montés sur une même traverse.

L'invention a pour autre objet un convoyeur auge comportant une bande transporteuse, qui est déformable de manière à former une auge et un ou plusieurs dispositifs de guidage latéral de l'invention ou un ou plusieurs ensembles de guidage latéral de l'invention.

L'invention a pour autre objet une utilisation du convoyeur auge susvisé pour le transport de vrac

### Brève description des figures

Les caractéristiques et avantages de l'invention apparaîtront plus complètement à la lecture de la description détaillée ci-après d'une variante préférée de réalisation de l'invention, laquelle description détaillée est donnée à titre d'exemple non limitatif et non exhaustif de l'invention, et en référence aux dessins annexés sur lesquels :
- La figure 1 est une vue en perspective isométrique représentant la partie amont d'un convoyeur auge dont la bande transporteuse est mise en auge au moyen de dispositifs de guidage latéral, dont le premier est conforme à une variante préférée de réalisation de l'invention et fait partie d'un ensemble de guidage latéral à deux rouleaux, dont un seul est visible sur la figure 1.
- La figure 2 est une vue en perspective isométrique représentant l'ensemble de guidage latéral à deux rouleaux de la figure 1, dans son état opérationnel, le support associé à chaque rouleau étant verrouillé.
- La figure 3 est une vue en perspective isométrique représentant l'ensemble de guidage latéral de la figure 2, l'une des parties du support associée à chaque rouleau de guidage fou étant déverrouillée et ayant été escamotée pour libérer complètement l'extrémité au point haut de l'axe des rouleaux, les deux rouleaux ayant pivoté par gravité dans leur position de démontage, dans laquelle ils sont, dans cette variante préférée, chacun retenus verticalement par un élément de retenue et sont complètement accessibles et peuvent être très facilement retirés de leur support.
- La figure 4 une vue arrière d'une autre variante de réalisation d'un ensemble de guidage à trois rouleaux ;
- La figure 5 une vue avant de l'ensemble de guidage à trois rouleaux de la figure 3.

### Description détaillée

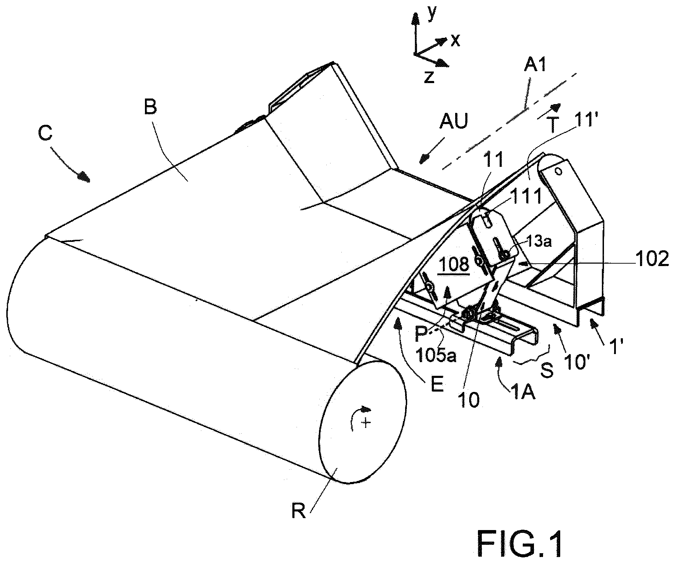

La figure 1 montre la partie amont d'un convoyeur auge C comportant :
- une station amont S de mise en auge réalisée au moyen d'un ensemble de guidage latéral E monolithique et comportant deux dispositifs de guidage latéral 1A et 1B, qui sont réalisés conformément à une variante préférée de réalisation de l'invention, et dont un seul dispositif de guidage latéral 1A est visible sur la figure 1,
- et, en sortie de la station S de mise en auge, un deuxième dispositif de guidage latéral 1' qui est connu dans l'état de la technique, et qui permet de maintenir la forme en auge du brin supérieur de la bande transporteuse B. Ce second dispositif aurait pu être également un dispositif de guidage latéral de l'invention

L'apport de l'invention réside principalement dans la nouvelle structure du support 10 de rouleau de guidage 11 du dispositif 1A.

### Convoyeur auge - Fig.1- Dispositifs de guidage latéral 1A et 1B (invention) et 1' (art antérieur)

Ce convoyeur auge C sert de manière usuelle au transport de « vrac » d'un point à un autre, c'est-à-dire de tout type de produits ou matériaux en vrac (par exemple et de manière non exhaustive : poudres, matériaux granulaires, déchets, ...) ou d'objets en vrac, et peut être utilisé dans tout type d'industrie (par exemple et de manière non exhaustive : agroalimentaire, génie civile, fabrication et réalisation de revêtements routiers, traitement des déchets, agriculture, ...).

Le convoyeur auge C de la figure 1 comporte une bande transporteuse sans fin B, qui est déformable de manière à pouvoir former une auge AU. De manière classique, cette bande transporteuse porteuse B est dévié autour d'un tambour détour amont R et autour d'un tambour détour aval (non représenté) et est tendue entre ces deux tambours détour. D'autres rouleaux, notamment de réglage de tension, peuvent également le cas échéant être mis en œuvre sur le brin retour (brin inférieur). Un des deux tambours détour est motorisé et permet de manière connue l'entraînement de la bande transporteuse, l'autre tambour détour étant monté fou et entraîné en rotation par friction par la bande transporteuse.

Sur la figure 1, on a représenté uniquement la partie amont du brin supérieur de la bande transporteuse, qui est en contact avec les rouleaux de guidage 11 et 11' des dispositifs de guidage latéral 1A et 1', la déviation de la bande transporteuse autour du rouleau R n'étant pas représentée.

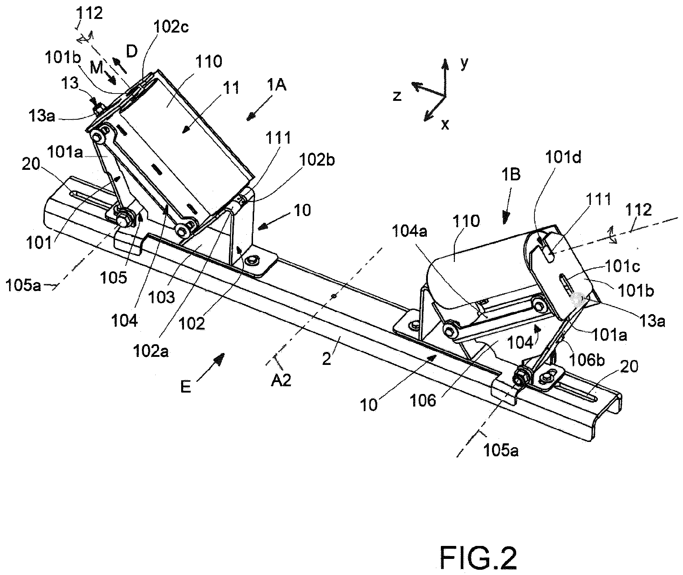

Sur la figure 1, la bande transporteuse sans fin B définit un axe longitudinal de convoyage A1 et son brin supérieur, qui sert au transport de vrac, est entraîné dans la direction de convoyage T. Seuls sont visibles les rouleaux de guidage des dispositifs 1A et 1' sur un des côtés de la bande transporteuse B, étant précisé que le brin supérieur est déformé de manière similaire sur son côté opposé, de préférence de manière sensiblement symétrique par rapport à l'axe longitudinal de convoyage A1, au moyen de dispositifs de guidage latéral 1B (Fig.2) et 1' positionnés au contact de l'autre côté, par rapport à l'axe de convoyage A1, du brin supérieur de la bande transporteuse B.

Dans la station S de mise en auge, le brin supérieur est mis en auge par les rouleaux 11 inclinés des dispositifs de guidage latéral 1A et 1B (1B non visible sur la figure 1), afin de passer d'une forme initiale non contrainte sensiblement plate à une forme contrainte en auge. En sortie de la station S de mise en auge, ce brin supérieur de la bande transporteur B est maintenu en forme par une succession de paires de dispositifs de guidage latéral suivants, tels que par exemple le dispositif de guidage latéral 1', qui sont judicieusement réparties et espacées le long de ce trajet, et ce jusqu'au point de délivrance du vrac. Sur la figure 1, les dispositifs de guidage latéral, après celui référencé 1', ne sont pas représentés, et peuvent avantageusement être des dispositifs de guidage latéral conformes à l'invention ; le dispositif 1' de la figure 1 peut également être remplacé par un dispositif de l'invention.

Généralement, mais pas exclusivement la délivrance du vrac transporté est réalisée par gravité au niveau du tambour d'entraînement aval, du fait du changement de direction du brin supérieur. Avant d'atteindre ce tambour d'entraînement aval, le brin supérieur n'est plus contraint et reprend sa forme initiale plate. En pratique, pour la transition entre la forme en auge à la forme plate du brin supérieur, on met en œuvre, comme dernière paire de rouleaux de guidage latéral, un ensemble de l'invention similaire par exemple à celui E de la station S de mise en auge.

On retiendra que dans le cadre de l'invention, le convoyeur auge peut comporter uniquement des dispositifs de guidage latéral conformes à l'invention ou peut comporter des dispositifs de guidage latéral conformes à l'invention et des dispositifs de guidage classiques tels que celui 1' de la figure 1.

On comprend à la lumière de la figure 1 que la bande transporteuse, du fait notamment de sa mise en tension et de sa déformation par les rouleaux de guidage latéral 11, 11', exerce sur ces rouleaux 11, 11' une pression importante, qui rend difficile et fastidieuse pour les dispositifs 1' de l'art antérieur, le démontage du rouleau de guidage 11' de son support 10' et également son montage sur son support 10'. En outre, l'accès au rouleau 11' pour procéder à son démontage est difficile, et est encore plus difficile lorsque le dispositif comporte une protection de point entrant P, telle que celle du dispositif de guidage latéral 1A de la figure 1.

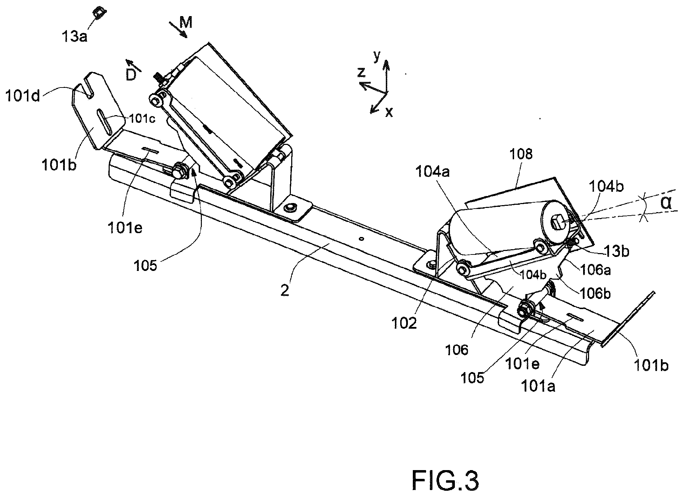

Le nouveau dispositif de guidage latéral de l'invention, dont une variante de réalisation préférée, et non limitative, va à présent être décrite en référence aux figures 2 et 3, permet avantageusement de complètement simplifier les opérations de montage et de démontage d'un rouleau de guidage latéral d'un convoyeur auge, en vue de sa maintenance, notamment sa vérification, son nettoyage, sa réparation ou son remplacement.

### Fig.2 et Fig.3- Variante préférée de réalisation- Ensemble E de deux dispositifs de guidage latéral 1

La figure 2 montre l'ensemble de guidage latéral E pour convoyeur auge de la figure 1, qui définit un axe de convoyage central A2 et comporte deux dispositifs de guidage latéral 1A et 1B, qui correspondent chacun à une variante préférée de réalisation.

Chaque dispositif 1A et 1B comporte un support 10 et un rouleau de guidage 11, de type rouleau fou.

Les rouleaux fou 11 sont parfaitement connus et déjà mis en œuvre dans les dispositifs de l'art antérieur, notamment tel que celui 1' de la figure 1.

On rappellera simplement qu'un rouleau fou 11 peut comporter un rouleau 110, qui est monté fou sur un arbre qui traverse le rouleau 110 ou sur deux bouts d'arbres alignés et positionnés aux deux extrémités du rouleau 110.

Dans le présent texte, on désigne par les termes :
- « axe » du rouleau de guidage fou 11, indifféremment un arbre traversant le rouleau 110 ou les deux bouts d'arbres alignés aux extrémités du rouleau 110,
- et par « axe *de rotation* » du rouleau de guidage fou 11, l'axe de rotation fictif (Fig.2 - axes de rotation 112) du rouleau 110 sur son « *axe* ».

Le support 10 définit un point de support haut et un point de support bas pour l'axe du rouleau 11, qui sont désignés ici respectivement «*point haut*» et «*point bas*»*,* et qui sont alignés suivant un axe, désigné ici «*axe de support*»*.*

Lorsque le rouleau 11 est monté sur le support 10, il est incliné en étant supporté entre le point haut et le point bas du support 10 et son axe de rotation 112 est parallèle à cet axe de support.

Les dispositifs de guidage latéral 1 A et 1B sont positionnés de part et d'autre de l'axe central de convoyage A2 de l'ensemble E, en étant écartés l'un de l'autre, le point bas de leur support 10 étant plus proche de cet axe central de convoyage A2 que le point haut de son support (10) qui en est plus éloigné.

L'axe de support des dispositifs de guidage latéral 1A et 1B est orienté transversalement à cet axe central de convoyage A2 et forme avec cet axe central de convoyage A2 un angle de 90° ou un angle dans une plage angulaire autour de 90° plus ou moins importante, et pouvant de préférence être réglable (par exemple sur une plage angulaire de +/- 10° autour de 90°).

Dans cet exemple préféré, les deux dispositifs 1A et 1B sont identiques et symétriques l'un de l'autre par rapport au plan (X Y) et présente un angle de 5° par rapport à la perpendiculaire de l'axe de convoyage central A2 de l'ensemble E.

Sur la figure 2, les deux dispositifs 1A et 1B sont dans leur état opérationnel, et peuvent guider latéralement et mettre en forme d'auge ou maintenir la forme d'auge de la bande transporteuse B susvisée (Fig.1).

Sur la figure 3, les rouleaux 11 des deux dispositifs 1A et 1B sont dans leur position de démontage (i.e. prêts à être retirés de leur support 10) dans laquelle ils sont facilement accessibles et peuvent facilement être retirés de leur support 10.

Dans la suite, on se réfère principalement au dispositif 1A, sachant que la description et les explications sont transposables bien évidemment au dispositif jumeau 1B.

### Support 10

Sur la figure 2, le rouleau de guidage latéral fou 11, désigné par simplification par la suite « rouleau » est monté, de manière démontable sur son support 10 porteur et est incliné, dans le cas présent d'un angle d'environ 35°. Cette valeur n'est bien évidemment pas limitative de l'invention, et le support 10 peut facilement être modifié au cas par cas pour obtenir un angle d'inclinaison différent, en fonction de la profondeur souhaitée pour la forme en auge AU (FIG.1).

Au surplus le support 10 peut être modifié de manière à permettre différents angles d'inclinaison du rouleau 11 pour un même support.

Ce support porteur 10, peut par exemple être en acier galvanisé ou inoxydable, et comporte deux éléments support 101 et 102 qui constituent respectivement une première partie et une deuxième partie du support 10, et qui sont fixés sur une platine 103. Cette platine 103 constitue une troisième partie du support 10 et permet de relier rigidement les deux éléments support 101 et 102, de manière à former un support 10 monolithique (i.e. d'un seul tenant).

Le support 10 comporte également un élément de retenue 104 qui sera décrit ultérieurement.

Les deux éléments support 101 et 102, et la platine 103, qui vont à présent être décrits plus en détail, peuvent avantageusement être réalisés par simple découpage et pliage d'une tôle plate, ce qui facilite leur fabrication (pas d'assemblage) et permet de leur conférer une excellente résistance mécanique. On obtient ainsi un support 10 robuste et apte à résister, de manière fiable et prolongée dans le temps, aux efforts transmis par les extrémités de l'axe du rouleau 11, du fait de la pression exercée sur le rouleau 11 par la bande transporteuse.

### Elément support (102) fixe

De préférence, l'élément support 102 est une tôle pliée en V qui est soudé sur la platine 103.

Cet élément support 102 comporte une découpe 102b qui est réalisée dans sa pliure 102a, et qui permet de recevoir et de supporter une des deux extrémités 111 de l'axe du rouleau 11 au point bas.

Dans cet exemple préféré, la géométrie et les dimensions de cette découpe 102b sont adaptées à celles de l'extrémité 111 de l'axe du rouleau, de telle sorte que cette extrémité d'axe 111 peut être insérée sans forcer, par le haut, dans la découpe 102b, et qu'une fois cette extrémité d'axe 111 insérée :
- L'axe du rouleau 11 prend appui verticalement sur l'élément support (i.e. point bas),
- L'axe du rouleau 11 est immobilisé en rotation dans un plan perpendiculaire à son axe de rotation 112 ;
- L'axe du rouleau 11 est bloqué par l'élément support 102 en translation vers le bas axialement (axe 112) et dans la direction de montage M (FIG.3).
- Lorsque le rouleau 11 est libéré de l'autre élément support 102, il peut librement pivoter vers le bas par gravité (i.e. sous l'effet de son propre poids) et n'est pas bloqué en translation axialement (axe 112) dans sa direction de démontage D (FIG.3).

On retiendra principalement que cet élément support 102 a pour fonction principale de supporter l'extrémité 111 de l'axe du rouleau 11 à un point bas. L'invention n'est pas limitée à cette structure particulière d'élément 102, lequel peut, d'une manière plus générale, être remplacé par tout moyen équivalent, de structure différente, remplissant la même fonction porteuse d'une extrémité 111 de l'axe du rouleau 11 à un point bas.

### Elément support 101 mobile

L'autre élément support 101 est également constitué d'une tôle découpée et pliée. Il comporte un bras 101a principal qui se prolonge, avec un angle de pliage, par une plaque supérieure 101b.

A son extrémité inférieure, le bras 101a est relié à la platine 103 par une articulation en rotation 105, qui permet son pivotement autour d'un axe de rotation 105a, par rapport à la platine 103.

De préférence, cette articulation en rotation 105 permet un pivotement de l'élément support 101 sur une plage angulaire d'au moins 60° de manière à libérer au maximum l'accès au rouleau 11 lorsque l'élément support 101 est en position escamotée (FIG.3).

Plus particulièrement, l'articulation en rotation 105 est positionnée sous le rouleau 11, entre les deux extrémités 111 de l'axe du rouleau 11, et de préférence à proximité de l'extrémité 111 de l'axe du rouleau 11 qui est supportée par l'élément support 101 dans ladite position opérationnelle, ce qui permet notamment de réduire le bras de levier entre cette articulation 105 et la force exercée par le poids du rouleau 11 sur la première partie 101 du support 10.

Plus particulièrement, le bras 101a principal articulé est incliné vers l'extérieur du rouleau et vers le haut par rapport à l'horizontal, au moins lorsque l'élément support 101 est en position opérationnelle (figure 2).

Plus particulièrement, dans l'exemple particulier de la figure 3, le bras 101a est avantageusement articulé de manière à pouvoir pivoter vers le bas jusqu'à une position escamotée dans laquelle il est orienté sensiblement horizontalement.

La plaque supérieure 101b de l'élément support 101 comporte un logement formé dans cet exemple particulier par une encoche 101d en forme de U, qui est réalisée dans son bord supérieur (cf. Dispositif 1B - FIG.1), et qui permet, lorsque l'élément support 101 est verrouillé dans sa position opérationnelle de la figure 3, de recevoir et supporter une extrémité 111 de l'axe du rouleau 11 au point haut.

Dans l'exemple particulier de la figure 3, la première partie 101 du support 10 est adaptée pour pivoter vers le bas jusqu'à une position escamotée dans laquelle l'élément support 101 n'est pas aligné avec l'extrémité 111 correspondante de l'axe du rouleau 11, et plus particulièrement dans cet exemple dans laquelle le logement 101d n'est pas aligné avec l'extrémité 111 correspondante de l'axe du rouleau 11.

La géométrie et les dimensions de cette encoche 101d sont adaptées à celles de l'extrémité 111 de l'axe du rouleau, de telle sorte que cette extrémité d'axe 111 peut être insérée sans forcer, par le haut, dans l'encoche 101d, et qu'une fois cette extrémité d'axe 111 insérée :
- L'axe du rouleau 11 prend appui verticalement sur l'élément support 101 (i.e. point haut),
- L'axe du rouleau 11 est immobilisé en rotation dans un plan perpendiculaire à son axe de rotation 112 ;
- L'axe du rouleau 11 est bloqué par l'élément support 101 en translation vers le haut axialement (axe 112) et dans la direction de démontage D (FIG.2).

On retiendra principalement que cet élément support 101 a pour fonction principale de supporter l'extrémité 111 de l'axe du rouleau 11 à un point haut.

L'invention n'est pas limitée à cette structure particulière d'élément 101, lequel peut, d'une manière plus générale, être remplacé par tout moyen équivalent, de structure différente, qui d'une manière plus générale est mobile entre une position opérationnelle verrouillable et une position escamotée, et qui une fois verrouillé dans cette position opérationnelle peut supporter une extrémité 111 de l'axe du rouleau 11 à un point haut.

Le point haut et le point bas du support 10 sont alignés suivant un axe, désigné ici « axe de support ». Lorsque le rouleau 11 est monté sur le support 10, son axe de rotation 112 est parallèle à cet axe de support.

Dans l'exemple préféré des figures 1 et 2, l'axe de rotation 105a de l'élément 101 est horizontal et transversal, et de préférence perpendiculaire, à cet axe de support, c'est-à-dire en pratique à l'axe de rotation 112 du rouleau 11, lorsque le rouleau 11 est monté sur le support 10. Ainsi, avantageusement dans sa position escamotée de la figure 3, l'élément support 101 n'occupe pas de place de part et d'autre du dispositif 1A.

### Verrouillage/ Déverrouillage de l'élément support 101

Chaque dispositif de réglage 1A (1B) comporte un moyen de verrouillage 13 de l'élément support 101 dans sa position opérationnelle de la figure 2.

Plus particulièrement dans l'exemple préféré de réalisation des figures annexées, ce moyen de verrouillage 13 comporte un écrou 13a et un axe fileté 13b (de type tige filetée) qui est intégré au support 10, et plus particulièrement dans cet exemple qui est fixé à l'élément de retenue 104.

En l'absence d'élément de retenue 104, l'axe fileté 13b peut être fixée en tout point fixe du support 10.

La plaque 101b de l'élément support 101 comporte une ouverture traversante 101c de forme oblongue (FIG.3), qui est positionnée et orientée de telle sorte qu'elle permet le passage de l'axe fileté 13b à travers la plaque 101b, lorsque l'élément support 101 pivote dans ladite position opérationnelle de la figure 2.

Au surplus, le support 10 comporte une plaque d'appui 106 qui est fixée, par exemple par soudage, entre l'élément de retenue 104 et la platine 103.

Cette plaque d'appui 106 a été découpée de telle sorte que l'un 106a (bord d'appui) de ses bords comporte un décrochement 106b, constituant un élément de centrage mâle.

Le bras 101a de l'élément 101 comporte une ouverture de centrage 101e traversante, de forme oblongue, qui est dimensionnée et orientée par rapport à l'élément de centrage mâle 106b, de telle sorte qu'au cours du pivotement de l'élément support 101 de sa position escamotée de la figure 3 vers sa position opérationnelle de la figure 2, cette ouverture 101e de la plaque 101b se positionne en vis-à-vis de l'élément de centrage 106b.

En poursuivant le pivotement, l'élément de centrage 106b passe à travers l'ouverture 101e, et permet de guider l'élément support 101 jusque dans sa position opérationnelle (FIG.2), en appui sur le bord d'appui 106a de la plaque 106 et de l'aligner parfaitement par rapport à l'autre élément support 102 qui est fixe.

Une fois pivoté dans cette position opérationnelle de la figure 2, l'élément support 101 est correctement centré, le point haut de l'élément support 101 étant correctement aligné avec le point bas de l'autre élément support 102 qui est fixe.

Le verrouillage de l'élément support 101 dans cette position opérationnelle peut ensuite être facilement réalisé en enfilant l'écrou 13a sur l'axe fileté 13b et en serrant suffisamment cet écrou 13a pour bloquer de manière fiable le pivotement de l'élément support 101 autour de l'articulation 105 et pour serrer l'élément support 101 en appui contre le bord d'appui 106a de la plaque d'appui.

Pour déverrouiller l'élément support 101, en vue de procéder à son escamotage, il suffit de desserrer et de retirer l'écrou 13a de l'axe fileté 13b.

### Elément de retenue 104

Dans l'exemple particulier des figures annexées, l'élément de retenue 104 du support 10 est fixe par rapport à l'élément support 102.

L'élément de retenue 104 a d'une manière générale pour fonction principale de retenir verticalement le rouleau 11 dans sa position de démontage de la figure 3 et d'éviter qu'il ne tombe sous l'effet de son propre poids.

Plus particulièrement, lorsque le rouleau 11 est monté sur le support 10, l'élément de retenue 104 est positionné sous le rouleau 11, et est écarté de ce rouleau 11.

De préférence, l'élément de retenue 104 est centré par rapport au rouleau 11 monté sur le support 10.

Dans la variante des figures annexées, l'élément de retenue 104 a également pour fonction supplémentaire de maintenir latéralement le rouleau 11 dans sa position de démontage.

Plus particulièrement, dans l'exemple particulier des figures 2 et 3, l'élément de retenue comporte un profilé en U comportant une base formant une plaque de retenue 104a et deux parois latérales de maintien 104b. Il forme ainsi une cuvette de retenue et de maintien latéral du rouleau 11 dans sa position de démontage.

L'élément de retenue 104 est fixé, à sa base, sur le bord supérieur de la plaque d'appui 106 et une de ses extrémités est fixée à l'élément support 102 fixe et 103, par exemple par soudage (FIG.3)

Cet élément de retenue 104 est de préférence incliné vers le haut depuis son extrémité la plus proche de l'élément support 102, et plus préférentiellement encore a sensiblement la même inclinaison que l'axe de support du support 10, autrement dit la même inclinaison que le rouleau 11 monté sur son support 10.

L'inclinaison de l'élément de retenue 104 et son écartement par rapport au rouleau 11 sont choisis de préférence de telle sorte :
- dans sa position de démontage, le rouleau 11 est maintenu incliné vers le haut depuis son point bas, ce qui permet d'éviter qu'il glisse accidentellement et tombe lorsqu'il n'est pas maintenu lors d'une opération de montage ou démontage,
et/ou
- l'angle de basculement (α) (FIG.3) du rouleau 11 dans sa position de démontage par rapport à cet axe de support peut être très faible et compris entre 0° (non inclus) et 45° et de préférence entre 5° et 20°.

La valeur d'angle minimum de 5° susvisée est la plupart du temps largement suffisante pour que le rouleau 11 soit suffisamment écarté de la bande et ne subisse plus une pression excessive de la part de la bande transporteuse.

A l'extrême, même si le rouleau 11 ne pivote pas du tout (α = 0) le démontage serait possible en retirant axialement le rouleau 11, car le frottement avec le brin supérieur de la bande B reste faible. Il est donc envisageable dans le cadre de l'invention d'avoir un rouleau 11 qui ne pivote pas par gravité lorsque son extrémité d'axe 111 au point haut est libérée, par exemple soit parce que le support à son autre extrémité d'axe 111, à l'opposée au point bas, retient verticalement le rouleau 11 en le maintenant en porte-à-faux ou soit parce que l'on a mis en œuvre une cale entre le rouleau et l'élément de retenue, qui maintient le rouleau 11 et l'empêche de pivoter vers le bas.

La valeur d'angle maximum 45° est préconisée (mais n'est pas limitative) pour éviter que l'ampleur du basculement du rouleau 11 ne soit pas trop importante et éviter que le rouleau 11 ne « rebondissent » accidentellement sur cet élément de retenue 104, lorsque le rouleau 11 n'est pas maintenu pendant son basculement.

Dans la variante des figures 2 et 3, les parois de maintien 104b et la paroi de retenue 104a font partie intégrante d'une même pièce (profil en U). Dans une autre variante, l'élément de retenue 104 peut ne pas être constitué d'une seule pièce, ni même être monolithique, la paroi de retenue 104a et les parois de maintien 104b pouvant par exemple être fixées de manière séparée sur une partie fixe du support 10.

### Protection de point entrant P

Le dispositif 1A ou 1B de l'invention peut, en fonction de sa position dans le convoyeur être équipé d'au moins une protection de point entrant P qui est fixée au support 10, sur une partie fixe de ce support 10, et par exemple à l'élément de retenue 104. La protection de point entrant P empêche de manière connue d'accéder au rouleau 11 par au moins un de ses deux côtés [côté amont du rouleau par rapport au sens de défilement de la bande pour éviter le pincement entre la bande et le rouleau].

Dans l'invention, pour éviter de gaspiller du temps à un démontage et remontage inutile, elle reste avantageusement en place pendant toute la durée d'intervention sur le convoyeur auge, lors des opérations de montage ou démontage d'un rouleau 11.

On soulignera que grâce à l'invention, le maintien de la protection de point entrant n'est pas pénalisant pour accéder au rouleau 11 du fait de l'accessibilité au rouleau 11 obtenue, dans l'invention, grâce à l'escamotage de l'élément support 101.

Cette protection de point entrant P est de préférence démontable du support 10 de manière à pouvoir adapter son positionnement d'un côté ou de l'autre du support 10 pour tenir compte du sens d'avancement du brin supérieur de la bande sans fin B, par rapport aux rouleaux 11.

Le positionnement sur le support 10 de cette protection de point entrant P est de préférence ajustable de manière à pouvoir régler son jeu de fonctionnement avec la bande.

Cette protection de point entrant P est obtenue par exemple au moyen d'une plaque 108 (FIG.1) de type rectangulaire dont la largeur est supérieure au diamètre du rouleau 11, et dont la longueur est supérieure à la longueur du rouleau de guidage.

### Ensemble E sous le brin supérieur de la bande transporteuse B

Cet ensemble de guidage latéral E est monolithique, c'est-à-dire d'un seul tenant.

Plus particulièrement, et de manière non limitative de l'invention, l'ensemble E comporte une traverse 2 sur laquelle sont montés et fixés, par exemple par boulonnage, les supports 10 des deux dispositifs 1A et 1B. **L'écartement** entre les supports 10 des deux dispositifs 1A et 1B sur la traverse 2 est de préférence réglable.

Pour poser et fixer l'ensemble E (sans les rouleaux 11) sur une structure porteuse, sous le brin supérieur de la bande transporteuse B, il suffit d'aligner dans un même plan vertical l'axe de convoyage A2 de l'ensemble E et l'axe de convoyage A1 susvisé (FIG.1) du convoyeur auge, ce qui permet un centrage des supports 10 par rapport à l'axe de de convoyage A1 du convoyeur.

Les opérations de montage et de démontage d'un rouleau 11 sur son support 10, en présence de la bande transporteuse B vont à présent être décrites.

### Opération de montage d'un rouleau 11

On suppose que l'élément support 101 est verrouillé dans sa position opérationnelle de la figure 2, mais qu'il ne supporte pas de rouleau 11.

Pour monter un rouleau 11 sur ce support 10, il suffit très simplement de procéder aux étapes successives suivantes.

On déverrouille l'élément support 101, en desserrant et en retirant l'écrou de serrage 13a de l'axe fileté 13b.

On fait pivoter cet élément support 101 dans sa position escamotée de la figure 3.

On positionne le rouleau par rapport à l'élément support 10 et on le déplace de manière à insérer une extrémité 111 de l'axe de ce rouleau 11 dans la découpe 102b de l'élément support 102. Le rouleau 11 peut alors avantageusement être lâché, et il se trouve alors dans la position de démontage de la figure 3, en appui sur le point bas du support 10.

On soulève le rouleau 11 en le faisant pivoter légèrement vers le haut pour l'amener au contact du brin supérieur de la bande transporteuse B.

Cette opération peut avantageusement être facilitée en utilisant une barre que l'on insère entre le rouleau 11 et l'élément de retenue 104, et en utilisant cet élément de retenue 104 comme point d'appui d'un levier, ce qui permet d'exercer plus facilement une pression sur le rouleau 11, qui est en contact avec la bande transporteuse, et de positionner plus facilement son autre extrémité à une hauteur suffisante (i.e. légèrement au-dessus du point haut du support 10), en repoussant le brin supérieur de la bande transporteuse porteuse.

En variante, l'opérateur peut également soulever le rouleau 11 sans prendre appui sur l'élément de retenue 104 pour repousser la bande transporteuse.

Puis on fait pivoter vers le haut l'élément support 101 jusque dans sa position opérationnelle et on le verrouille dans cette position au moyen de l'écrou 13a.

On peut alors relâcher la pression sur le rouleau 11 de manière à le faire descendre légèrement pour que son extrémité d'axe 111 au point haut pénètre en descendant dans l'encoche 101d de la plaque 101b de l'élément support 101.

De préférence, on vérifie et si nécessaire on resserre l'écrou 13a au moyen d'une clef dynamométrique.

Cette opération de montage peut être réalisée facilement, rapidement et sans risque par une seule personne.

### Opération de démontage d'un rouleau 11

Pour retirer rouleau 11 de son support, il suffit très simplement de procéder aux étapes successives suivantes.

On déverrouille l'élément support 101, en desserrant et en retirant l'écrou de serrage 13a de l'axe fileté13b.

Depuis sa position opérationnelle de la figure 2, on fait pivoter vers le bas cet élément support 101 dans sa position escamotée de la figure 3, ce qui permet de libérer très facilement l'extrémité 111 de l'axe du rouleau au point haut , lequel rouleau 11 pivote de lui-même vers le bas, par simple effet de la gravité (i.e. sous son propre poids), en étant toujours supporté en appui (point bas) à son autre extrémité, et descend jusqu'à l'élément de retenu 104 qui le bloque verticalement dans sa position de démontage de la figure 3.

Plus particulièrement, dans cet exemple préféré de réalisation, lorsque l'élément support 101 est abaissé depuis la position opérationnelle dans laquelle il supporte le rouleau 11, dans une première phase il retient verticalement le rouleau 11 qui pivote vers le bas par gravité, jusqu'à ce que le rouleau 11 soit bloqué verticalement dans sa position de démontage par l'élément de retenue 104, et ensuite dans une deuxième phase, en poursuivant le pivotement vers le bas de la première partie 101 du support 10, l'élément support 101 est complètement dégagé de l'extrémité 111 de l'axe du rouleau 11, qui reste bloqué verticalement par l'élément de retenue 104.

L'élément support 101 peut ainsi avantageusement être complètement dégagé de la première extrémité 111 de l'axe du rouleau 11 en abaissant la première partie 101 du support 10 depuis une position opérationnelle dans laquelle il supporte le rouleau, et sans déplacer le rouleau 11 vers le haut, et en particulier sans faire pivoter le rouleau 11 vers le haut.

Dans cette position de démontage, la pression exercée par la bande de transport sur le rouleau 11 est nettement plus faible que dans la position opérationnelle du rouleau. Au surplus, le rouleau 11 est facilement accessible (Fig.3), l'élément support 101 ne faisant plus obstacle grâce à son escamotage. Il suffit alors très facilement de retirer le rouleau 11 en le tirant dans sa direction axiale pour dégager complètement son extrémité 111 au point bas de l'élément support 102.

Cette opération de démontage peut être réalisée par une seule personne facilement, rapidement, et sans risque.

L'invention n'est pas limitée à la variante particulière de réalisation de l'élément de retenue 104 des figures annexées.

En particulier, il est envisageable dans le cadre de l'invention de mettre en œuvre un rouleau 11 qui ne pivote pas par gravité lorsque son extrémité d'axe 111 au point haut est libérée, l'élément de retenue 104 ayant pour fonction de retenir verticalement le rouleau en position de démontage sans que celui-ci ne pivote vers le bas, c'est-à-dire dans une position de démontage dans laquelle le rouleau n'a pas basculé vers le bas.

Dans cette variante, tel que précédemment décrit (α = 0), l'élément de retenue 104 du support 101 peut par exemple être mis en œuvre avec une cale rapportée, qui peut être utilisée et mise en place pour le démontage ou montage du rouleau 11, en étant insérée entre le rouleau et l'élément de retenue 104 et qui peut être retirée une fois le rouleau démonté ou monté sur le support 10.

Dans cette variante également, tel que précédemment décrit (α = 0), l'élément de retenue 104 du support 101 peut également être constitué par la partie de l'élément support 102 qui supporte l'axe du rouleau 11 au point bas et qui est adaptée pour avoir une portance suffisante pour maintenir le rouleau 11 en porte-à-faux dans sa position de démontage lorsque l'élément support 101 est escamoté et ne supporte pas le rouleau 11.

Dans une autre variante de l'invention, l'élément de retenue 104 peut être mobile par rapport à l'élément support 102 et apte à être déplacé jusqu'à une position de retenue dans laquelle il peut retenir verticalement le rouleau 11 dans sa position de démontage lorsque l'élément support 101 est escamoté et ne supporte pas le rouleau 11.

Dans une autre variante de l'invention, l'élément de retenue 104 du support 10 peut être un élément du support 10 qui est démontable et qui peut être mis en place pendant une opération de démontage ou une opération de montage et qui peut par exemple être retiré le reste du temps.

On peut également souligner que le dispositif de l'invention peut facilement être installé sur toutes les installations de convoyage existantes et utilisant un convoyeur auge, et notamment peut avantageusement remplacer les dispositifs de guidage latéral existants, tel que celui 1' de la figure 1, dans le cadre par exemple d'une opération de modernisation de convoyeurs auge existants.

L'invention n'est pas limitée à la variante préférée de réalisation des figures annexées. De manière non exhaustive, les modifications suivantes peuvent être apportées.

L'élément support 101 peut être escamotable en mettant en œuvre un autre déplacement (par exemple une translation) ou une combinaison de déplacements (par exemple translation(s) et rotation(s), autre que la seule rotation.

L'articulation en rotation 105 n'est pas nécessairement entre l'élément support 101 et la platine 103, mais pourrait par exemple être prévue sur l'élément support 101 lui-même, par exemple entre le bras 101a et la plaque supérieure 101b de cet élément support 101, de sorte que c'est la plaque 101b qui serait escamotable par pivotement et constituerait « ladite première partie du support ». Dans ce cas il faut également modifier le verrouillage pour que ce soit la plaque 101b qui soit verrouillable sur un point fixe du support.

Le support 10 peut être conçu de telle sorte que l'élément support 101 peut être escamoté en étant détaché du reste du support 10.

Le support 10 peut être modifié de manière à permettre un réglage de l'inclinaison du rouleau 11.

Le dispositif de l'invention ne fait pas nécessairement partie d'un ensemble monolithique, tel que celui E des figures annexées, la traverse 2 pouvant ne pas être mise en œuvre et chaque dispositif 1A, 1B pouvant être indépendant l'un de l'autre.

De préférence, lors du démontage du rouleau 11, l'escamotage de la première partie 101 du support 10 peut avantageusement être réalisé sans déplacer le rouleau 11 vers le haut et en particulier sans faire pivoter le rouleau 11 vers le haut, ce qui permet d'éviter d'exercer une pression supplémentaire sur la bande transporteuse B. Néanmoins, dans une autre variante de l'invention, on peut également déplacer le rouleau 11 vers le haut ou faire pivoter le rouleau 11 vers le haut, avant l'escamotage de la première partie 101 du support 10, par exemple pour dégager le cas échéant l'axe du rouleau 11 de la première partie 101 du support 10, par exemple en utilisant un levier, telle qu'une barre à mine ou équivalent, inséré entre le rouleau 11 et l'élément de retenue 104 et en prenant l'élément de retenue 104 comme point d'appui de ce levier pour soulever le rouleau 11.

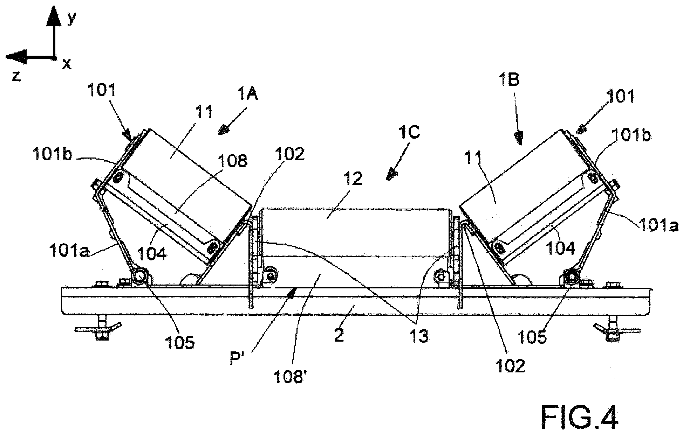

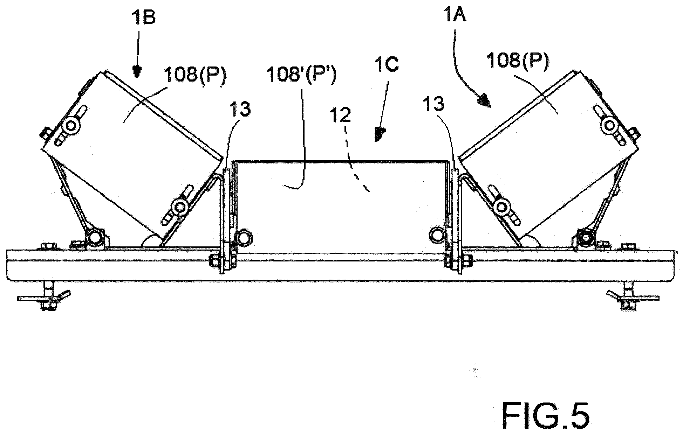

Dans la variante particulière des figures 4 et 5, l'ensemble de guidage comporte en plus des dispositifs de guidage latéral 1A et 1B, **un** dispositif de guidage central 1C, monté entre les deux dispositifs de guidage latéral 1A et 1B. Ce dispositif de guidage central 1C comporte un rouleau de guidage 12 fou, qui est central et horizontal, et qui est supporté à chacune de ses deux extrémités par un support 13.

Ce dispositif de guidage central 1C comporte également une protection de point entrant P' comportant de préférence une plaque 108' de type rectangulaire, qui est fixée aux supports 13 du rouleau 12, dont la largeur est supérieure au diamètre du rouleau 12 et dont la longueur est supérieure à la longueur du rouleau 12.

## Revendications

1. Dispositif (1A/1B) de guidage latéral d'une bande transporteuse sans fin (B) d'un convoyeur auge, le dispositif comportant un support (10) et un rouleau de guidage fou (11), qui est apte à être monté de manière démontable sur le support (10), entre une première partie (101) permettant, dans une position opérationnelle, de supporter une première extrémité (111) de l'axe du rouleau (11) à un point haut et une deuxième partie (102) permettant de supporter une deuxième extrémité (111) de l'axe du rouleau (11) à un point bas, dans lequel la première partie (101) du support est mobile entre ladite position opérationnelle et une position escamotée, et le dispositif de guidage latéral comporte un moyen de verrouillage (13), qui permet de verrouiller la première partie (101) dans ladite position opérationnelle, et dans lequel une fois la première partie (101) verrouillée dans ladite position opérationnelle et le rouleau (11) monté sur le support (10), la première partie (101) peut être déverrouillée et peut être complètement dégagée de la première extrémité (111) de l'axe du rouleau (11) et être amenée jusque dans ladite position escamotée, **caractérisé en ce que** le support (10) comporte un élément de retenue (104), qui a pour fonction, lorsque la première partie (101) du support (10) est amenée en position escamotée et ne supporte pas le rouleau (11), de retenir verticalement le rouleau (11) dans une position de démontage dans laquelle la deuxième extrémité (111) de l'axe du rouleau (11) est supportée au point bas par la deuxième partie (102) du support (10).

2. Dispositif de guidage latéral selon la revendication 1 dans lequel, lorsque la première partie (101) du support (10) est amenée en position escamotée dans laquelle elle ne supporte pas le rouleau (11), le rouleau (11) est apte à pivoter vers le bas par gravité, en étant supporté au point bas par la deuxième partie (102) du support (10), et l'élément de retenue (104) a pour fonction de retenir verticalement le rouleau (11) dans ladite position de démontage lorsque le rouleau (11) pivote vers le bas.

3. Dispositif de guidage latéral selon l'une quelconque des revendications 1 à 2, dans lequel dans ladite position escamotée de la première partie (101) du support (10), le rouleau (11) est complètement accessible axialement, et de préférence est adapté pour être retiré axialement de la deuxième partie (102) du support (10).

4. Dispositif de guidage latéral selon l'une quelconque des revendications 1 à 3, dans lequel le support (10) comprend une articulation (105) en rotation permettant le pivotement de la première partie (101) du support (10) entre ladite position opérationnelle et ladite position escamotée, et de préférence dans lequel l'articulation (105) permet un pivotement de la première partie (101) du support sur une plage angulaire d'au moins 60°.

5. Dispositif de guidage latéral selon l'une quelconque des revendications 1 à 4, dans lequel l'élément de retenue (104) est positionné sous le rouleau (11), lorsque celui-ci est monté sur le support (10) et/ou dans lequel l'élément de retenue (104) est incliné vers le haut depuis son extrémité la plus proche de la deuxième partie (102), et de préférence a sensiblement la même inclinaison que le rouleau (11) monté sur son support et/ou dans lequel l'élément de retenue (104) est également adapté pour maintenir latéralement le rouleau de guidage dans sa position de démontage.

6. Dispositif guidage latéral selon l'une quelconque des revendications 1 à 5, dans lequel l'élément de retenue comporte une paroi de retenue (104a) qui est positionnée sous le rouleau (11), lorsque celui-ci est monté sur le support (10), et de préférence dans lequel l'élément de retenue (104) comporte deux parois (104b) de maintien latéral qui forment, avec la paroi de retenue (104a), une cuvette de retenue et de maintien latéral du rouleau (11) dans sa position de démontage.

7. Dispositif de guidage latéral selon l'une quelconque des revendications 1 à 6, dans lequel dans sa position de démontage le rouleau (11) est maintenu incliné vers le haut depuis son point bas et/ou dans lequel le point bas et le point haut de support (10) définissent un axe de support, et l'angle (α) de basculement vers le bas du rouleau (11) dans sa position de démontage par rapport à cet axe de support est strictement supérieur à 0° et inférieur ou égal à 45°, et de préférence entre 5° et 20°.

8. Dispositif de guidage latéral selon l'une quelconque des revendications 1 à 7, comportant au moins une protection de point entrant (P) qui est fixée à une partie fixe du support, de préférence de manière démontable, et qui empêche d'accéder au rouleau (11) par au moins un de ses deux côtés principaux, ladite protection de point entrant comportant de préférence une plaque (108) de type rectangulaire dont la largeur est supérieure au diamètre du rouleau (11), et dont la longueur est supérieure à la longueur du rouleau (11).

9. Dispositif (1A/1B) de guidage latéral d'une bande transporteuse sans fin (B) d'un convoyeur auge, le dispositif comportant un support (10) et un rouleau de guidage fou (11), qui est apte à être monté de manière démontable sur le support (10), entre une première partie (101) permettant, dans une position opérationnelle, de supporter une première extrémité (111) de l'axe du rouleau (11) à un point haut et une deuxième partie (102) permettant de supporter une deuxième extrémité (111) de l'axe du rouleau (11) à un point bas, dans lequel la première partie (101) du support est mobile entre ladite position opérationnelle et une position escamotée dans laquelle la première partie (101) du support (10) est complètement dégagée de l'extrémité (111) de l'axe du rouleau (11), et le dispositif de guidage latéral comporte un moyen de verrouillage (13), qui permet de verrouiller la première partie (101) du support (10) dans ladite position opérationnelle, **caractérisé en ce que** le support (10) comporte un élément d'appui fixe (106) et le moyen de verrouillage (13) permet un serrage de la première partie (101) contre cet élément d'appui fixe (106), et **en ce que** l'élément d'appui fixe (106) comporte un élément de centrage (106b), qui est apte à coopérer avec un élément de centrage complémentaire (101e) de la première partie (101) du support, de manière à centrer la première partie (101) lorsqu'elle est amenée dans ladite position opérationnelle et est verrouillée en étant serrée contre l'élément d'appui fixe (106).

10. Dispositif de guidage latéral selon la revendication 9, dans lequel l'élément d'appui comporte une plaque d'appui (106), dont un bord d'appui (106a) comporte un élément de centrage mâle (106b), et dans lequel la première partie (101) du support (10) comporte une ouverture de centrage (101e) traversante, de préférence de forme oblongue, qui est dimensionnée et orientée par rapport à l'élément de centrage mâle (106b), de telle sorte qu'au cours du déplacement de la première partie (101) du support (10) de sa position escamotée jusque dans sa position opérationnelle, cette ouverture de centrage (101e) se positionne en vis-à-vis de l'élément de centrage mâle (106b), et l'élément de centrage mâle (106b) passe à travers l'ouverture de centrage (101e) et permet de guider et centrer la première partie (101) du support (10) jusque dans sa position opérationnelle en appui sur le bord d'appui (106a) de la plaque d'appui (106).

11. Ensemble de guidage latéral (E) d'une bande transporteuse sans fin (B) d'un convoyeur auge (C), lequel ensemble définit un axe central de convoyage (A2) et comporte au moins une paire de dispositifs de guidage latéral (1A/ 1B), dans laquelle au moins un premier dispositif (1A) est un dispositif de guidage latéral selon l'une quelconque des revendications 1 à 10 et le deuxième dispositif de guidage latéral (1B) peut être ou non un dispositif selon l'une quelconque des revendications 1 à 10, dans lequel lesdits premier et deuxième dispositifs de guidage latéral sont positionnés de part et d'autre de l'axe central de convoyage (A2), en étant écartés l'un de l'autre, le point bas du support (10) du premier dispositif (1A) étant plus proche de cet axe central de convoyage (A2) que le point haut de son support (10).

12. Convoyeur auge (C) comportant une bande transporteuse (B), qui est déformable de manière à former une auge, et un ou plusieurs dispositifs de guidage latéral selon l'une quelconque des revendications 1 à 10 ou un ou plusieurs ensembles de guidage latéral selon la revendication 11.

13. Procédé de démontage d'un rouleau de guidage fou (11) d'un dispositif de guidage latéral (1A ou 1B) de l'une quelconque des revendications 1 à 8, qui est monté au contact du brin supérieur d'une bande transporteuse (B) en forme d'auge d'un convoyeur auge (C), le brin supérieur exerçant une pression sur le rouleau de guidage fou (11), et étant déformé localement ou maintenu déformé localement par ledit rouleau (11), ledit procédé comportant la succession d'étapes suivantes :
(a) on déverrouille la première partie (101) du support (10) ;
(b) on escamote cette première partie (101) de manière à libérer l'extrémité (111) de l'axe du rouleau (11) au point haut, de telle sorte que le rouleau (11) reste en appui à son autre extrémité au point bas du support (10) et est retenu verticalement par l'élément de retenue (104) du support (10) dans une position de démontage ;
(c) on retire le rouleau (11) de son support, de préférence en le tirant dans sa direction axiale pour dégager complètement son extrémité (111) au point bas de la deuxième partie (102) du support et de préférence dans lequel à l'étape (b), le rouleau (11) pivote vers le bas par gravité jusqu'à ce qu'il soit retenu verticalement par l'élément de retenue (104) du support (10) dans ladite position de démontage.

14. Procédé de montage d'un rouleau de guidage fou d'un dispositif de guidage latéral de l'une quelconque des revendications 1 à 8, dont le support (10) est déjà monté dans un convoyeur auge comportant une bande transporteuse (B) en forme d'auge, qui est déformable pour sa mise en auge ou son maintien en auge, ledit procédé comportant la succession d'étapes suivantes :
(a) la première partie (101) du support étant escamotée, on positionne le rouleau par rapport au support (10) et on le déplace de manière à positionner une extrémité (111) de l'axe du rouleau (11) sur la deuxième partie (102) du support (10), afin qu'elle soit supportée à un point bas, le rouleau (11) étant retenu verticalement par l'élément de retenue (104) du support (10) ;
(b) on soulève le rouleau (11) en le faisant pivoter vers le haut pour l'amener au contact du brin supérieur de la bande transporteuse (B) ;
(c) on amène la première partie (101) du support (10) dans sa position opérationnelle et on la verrouille dans cette position ;
(d) on positionne l'autre extrémité (111) de l'axe du rouleau (11) sur la deuxième partie (102) du support (10), afin qu'elle soit supportée à un point haut du support (10) et de préférence dans lequel à l'étape (b), on fait pivoter vers le haut le rouleau (11), en utilisant un levier et en prenant l'élément de retenue (104) comme point d'appui de ce levier.

15. Utilisation du convoyeur auge selon la revendication 12 pour le transport de vrac.

## Patentansprüche

1. Vorrichtung (1A/1B) zur seitlichen Führung eines endlosen Förderbandes (B) eines Muldenförderers, wobei die Vorrichtung
einen Träger (10) und
eine lose Führungsrolle (11) aufweist, die demontierbar auf dem Träger (10) montiert ist, zwischen einem ersten Teil (101), der in einer Betriebsposition ein Abstützen eines ersten Endes (111) der Achse der Rolle (11) an einem hohen Punkt ermöglicht, und einem zweiten Teil (102), der ein Abstützen eines zweiten Endes (111) der Achse der Rolle (11) an einem unteren Punkt ermöglicht, wobei der erste Teil (101) des Trägers zwischen der Betriebsposition und einer eingezogenen Position bewegbar ist,
und die Vorrichtung zur seitlichen Führung ein Verriegelungsmittel (13) aufweist, das es erlaubt, den ersten Teil (101) in der Betriebsposition zu verriegeln, und wobei, wenn der erste Teil (101) in der Betriebsposition verriegelt ist und die Rolle (11) auf dem Träger (10) montiert ist, der erste Teil (101) entriegelt und vollständig von dem ersten Ende (111) der Achse der Rolle (11) gelöst und bis in die eingezogene Position gebracht werden kann,
**dadurch gekennzeichnet, dass** der Träger (10) ein Halteelement (104) aufweist, das die Funktion hat, wenn der erste Teil (101) des Trägers (10) in die eingezogene Position gebracht ist/wird und die Rolle (11) nicht stützt (11), die Rolle (11) vertikal in einer Demontageposition zu halten, in der das zweite Ende (111) der Achse der Rolle (11) an dem unteren Punkt von dem zweiten Teil (102) des Trägers (10) gestützt wird.

2. Vorrichtung zur seitlichen Führung nach Anspruch 1, wobei, wenn der erste Teil (101) des Trägers (10) in die eingezogene Position gebracht ist/wird, in der dieser die Rolle nicht stützt (11), die Rolle (11) durch die Schwerkraft nach unten schwenkbar ist, wobei sie an dem unteren Punkt durch den zweiten Teil (102) des Trägers (10) gestützt ist/wird, und das Halteelement (104) die Funktion hat, die Rolle (11) in der Demontageposition vertikal zu halten, wenn die Rolle (11) nach unten schwenkt.

3. Vorrichtung zur seitlichen Führung nach einem der Ansprüche 1 bis 2, wobei in der eingezogenen Position des ersten Teils (101) des Trägers (10) die Rolle (11) axial vollständig zugänglich ist und bevorzugt axial von dem zweiten Teil (102) des Trägers (10) herausnehmbar ist.

4. Vorrichtung zur seitlichen Führung nach einem der Ansprüche 1 bis 3, wobei der Träger (10) ein Drehgelenk (105) aufweist, welches ein Schwenken des ersten Teils (101) um eine vertikale Achse des Trägers (10) zwischen der Betriebsposition und der eingezogenen Position erlaubt, und wobei das Gelenk (105) bevorzugt ein Schwenken des ersten Teils (101) des Trägers in einem Winkelbereich von mindestens 60° erlaubt.

5. Vorrichtung zur seitlichen Führung nach einem der Ansprüche 1 bis 4, wobei das Halteelement (104) unter der Rolle (11) positioniert ist, wenn diese auf dem Träger (10) montiert ist, und/oder wobei das Halteelement (104) von seinem dem zweiten Teil (102) am nächsten liegenden Ende nach oben geneigt ist und bevorzugt im Wesentlichen die gleiche Neigung aufweist wie die auf ihrem Träger montierte Rolle (11), und/oder wobei das Halteelement (104) auch dazu ausgelegt ist, die Führungsrolle in ihrer Demontageposition seitlich zu halten.

6. Vorrichtung zur seitlichen Führung nach einem der Ansprüche 1 bis 5, wobei das Halteelement eine Haltewand (104a) aufweist, die unter der Rolle (11) positioniert ist, wenn diese auf dem Träger (10) montiert ist, und wobei das Halteelement (104) bevorzugt zwei seitliche Haltewände (104b) aufweist, die zusammen mit der Haltewand (104a) eine Wanne zum Halten und seitlichen Stabilisieren der Rolle (11) in ihrer Demontageposition bilden.

7. Vorrichtung zur seitlichen Führung nach einem der Ansprüche 1 bis 6, wobei die Rolle in ihrer Demontageposition (11) von ihrem unteren Punkt aus nach oben geneigt gehalten wird und/oder wobei der untere Punkt und der obere Punkt des Trägers (10) eine Trägerachse definieren, und der Neigungswinkel (α) nach unten der Rolle (11) in ihrer Demontageposition gegenüber dieser Trägerachse streng größer als 0° und kleiner oder gleich 45° ist, bevorzugt zwischen 5° und 20°.

8. Vorrichtung zur seitlichen Führung nach einem der Ansprüche 1 bis 7, mit mindestens einem Schutz des Eintrittspunkts (P), welcher an einem festen Teil des Trägers, bevorzugt demontierbar, befestigt ist, und welcher den Zugang zu der Rolle (11) von mindestens einer ihrer zwei Hauptseiten verhindert, wobei der Schutz des Eintrittspunkts eine rechteckige Platte (108) aufweist, deren Breite größer als der Durchmesser der Rolle (11) ist und deren Länge größer ist als die Länge der Rolle (11) ist.

9. Vorrichtung (1A/1B) zur seitlichen Führung eines endlosen Förderbandes (B) eines Muldenförderers, wobei die Vorrichtung
einen Träger (10) und
eine lose Führungsrolle (11) aufweist, die demontierbar auf dem Träger (10) montiert ist, zwischen einem ersten Teil (101), der in einer Betriebsposition ein Abstützen eines ersten Endes (111) der Achse der Rolle (11) an einem hohen Punkt ermöglicht, und einem zweiten Teil (102), der ein Abstützen eines zweiten Endes (111) der Achse der Rolle (11) an einem unteren Punkt ermöglicht, wobei der erste Teil (101) des Trägers zwischen der Betriebsposition und einer eingezogenen Position bewegbar ist, in welcher der erste Teil (101) des Trägers (10) vollständig von dem Ende (111) der Achse der Rolle (11) getrennt ist,
und die Vorrichtung zur seitlichen Führung ein Verriegelungsmittel (13) aufweist, das es erlaubt, den ersten Teil (101) des Trägers (10) in der Betriebsposition zu verriegeln,
**dadurch gekennzeichnet, dass**
der Träger (10) ein festes Stützelement (106) aufweist und das Verriegelungsmittel (13) ein Festklemmen des ersten Teils (101) gegen dieses feste Stützelement (106) erlaubt, und dass das feste Stützelement (106) ein Zentrierelement (106b) aufweist, welches mit einem komplementären Zentrierelement (101e) des ersten Teils (101) des Trägers zusammenwirken kann, um den ersten Teil (101) zu zentrieren, wenn dieser in die Betriebsposition gebracht ist/wird und durch Festklemmen gegen das feste Stützelement (106) verriegelt ist/wird.

10. Vorrichtung zur seitlichen Führung nach Anspruch 9, wobei das Stützelement eine Stützplatte (106) aufweist, bei der eine Stützkante (106a) ein vorstehendes Zentrierelement (106b) aufweist, und wobei der erste Teil (101) des Trägers (10) eine durchgehende, bevorzugt längliche, Zentrieröffnung (101e) aufweist, die in Bezug auf das vorstehende Zentrierelement (106b) derart dimensioniert und ausgerichtet ist, dass diese Zentrieröffnung (101) während der Bewegung des ersten Teils (101) des Trägers (10) von seiner eingezogenen Position zu seiner Betriebsposition (101e) zu dem vorstehenden Zentrierelement (106b) weisend positioniert ist und das vorstehende Zentrierelement (106b) durch die Zentrieröffnung (101e) geht und das Führen und Zentrieren des ersten Teils (101) des Trägers (10) bis in dessen Betriebsposition, in der er auf der Stützkante (106a) der Auflageplatte (106) aufliegt, erlaubt.

11. Anordnung zur seitlichen Führung (E) eines endlosen Förderbands (B) eines eines Muldenförderers (C), wobei die Anordnung eine zentrale Förderachse (A2) definiert und mindestens ein Paar von seitlichen Führungsvorrichtungen (1A/1B) umfasst, wobei mindestens eine erste Vorrichtung (1A) eine seitliche Führungsvorrichtung nach einem der Ansprüche 1 bis 10 ist und die zweite seitliche Führungsvorrichtung (1B) eine Vorrichtung nach einem der Ansprüche 1 bis 10 sein kann oder nicht, wobei die erste und die zweite seitliche Führungsvorrichtung auf beiden Seiten des Förderbandes (B) beabstandet positioniert sind, wobei der untere Punkt des Trägers (10) der ersten Vorrichtung (1A) näher an der zentralen Förderachse (A2) liegt als der obere Punkt des Trägers (10).

12. Muldenförderer (C) mit einem Förderband (B), das unter Bildung einer Mulde verformbar ist, und einer oder mehreren Vorrichtungen zur seitlichen Führung nach einem der Ansprüche 1 bis 10 oder einer oder mehreren Anordnungen zur seitlichen Führung nach Anspruch 11.

13. Verfahren zum Demontieren einer losen Führungsrolle (11) einer seitlichen Führungsvorrichtung (1A oder 1B) nach einem der Ansprüche 1 bis 8, die in Kontakt mit einem oberen Strang eines muldenförmigen Förderbandes (B) eines Muldenförderers (C) angebracht ist, wobei der obere Strang Druck auf die lose Führungsrolle (11) ausübt und durch die Rolle lokal verformt ist/wird oder lokal verformt gehalten wird, wobei das Verfahren die folgenden aufeinanderfolgenden Schritte aufweist:
(a) der erste Teil (101) des Trägers (10) wird entriegelt;
(b) der erste Teil (101) wird so zurückgezogen, dass das Ende (111) der Achse der Rolle (11) am oberen Punkt freigegeben wird, so dass die Rolle (11) mit ihrem anderen Ende am unteren Punkt des Trägers (10) aufliegt und durch das Halteelement (104) des Trägers (10) in einer Demontageposition vertikal gehalten wird;
(c) die Rolle (11) wird aus ihrem Träger entfernt, bevorzugt durch Ziehen in ihrer axialen Richtung, um ihr Ende (111) am unteren Punkt des zweiten Teils (102) des Trägers vollständig zu lösen,
und wobei bevorzugt in Schritt (b) die Rolle (11) durch Schwerkraft nach unten schwenkt, bis sie durch das Halteelement (104) des Trägers (10) in der Demontageposition vertikal gehalten wird.

14. Verfahren zum Montieren einer losen Führungsrolle einer seitlichen Führungsvorrichtung nach einem der Ansprüche 1 bis 8, deren Träger (10) bereits in einem Muldenförderer mit einem muldenförmigen Förderband (B) montiert ist, welches zu einer Mulde verformbar oder muldenförmig gehalten werden kann, wobei das Verfahren die folgenden aufeinanderfolgenden Schritte umfasst:
(a) bei eingezogenem Zustand des ersten Teils (101) wird die Rolle in Bezug auf den Träger (10) positioniert und so verschoben, dass ein Ende (111) der Achse der Rolle (11) auf dem zweiten Teil (102) des Trägers (10) positioniert wird, so dass diese an einem unteren Punkt getragen wird, wobei die Rolle (11) durch das Halteelement (104) des Trägers (10) vertikal gehalten wird;
(b) die Rolle (11) wird unter Drehen nach oben angehoben, um diese mit dem oberen Strang des Förderbandes (B) in Kontakt zu bringen;
(c) der erste Teil (101) des Trägers (10) wird in seine Betriebsposition gebracht und in dieser Position verriegelt;
(d) das andere Ende (111) der Achse der Rolle (11) wird auf dem zweiten Teil (102) des Trägers (10) positioniert, so dass es an einem oberen Punkt des Trägers (10) getragen wird,
wobei in dem Schritt (b) bevorzugt die Rolle (11) unter Verwendung eines Hebels und unter Verwendung des Halteelements (104) als Auflagepunkt dieses Hebels nach oben geschwenkt wird.

15. Verwendung des Muldenförderers nach Anspruch 12 zum Transport von Schüttgut.

## Claims

1. A lateral guide device (1A/1B) for laterally guiding an endless conveyor belt (B) of a trough conveyor, the device comprising a support (10) and an idle guide roller (11) which is able to be mounted in a removable manner on the support (10) between a first part (101) that makes it possible to support, in an operational position, a first end (111) of the axle of the roller (11) at an upper point and a second part (102) that makes it possible to support a second end (111) of the axle of the roller (11) at a lower point, wherein the first part (101) of the support is movable between said operational position and a retracted position, and the lateral guide device comprises a locking means (13) which makes it possible to lock the first part (101) in said operational position, and wherein once the first part (101) is locked in said operational position and the roller (11) is mounted on the support (10), the first part (101) can be unlocked and can be completely disengaged from the first end (111) of the axle of the roller (11) and brought into said retracted position, **characterized in that** the support (10) comprises a retaining element (104) which, when the first part (101) of the support (10) is brought into the retracted position and does not support the roller (11), has the function of vertically retaining the roller (11) in a removal position in which the second end (111) of the axle of the roller (11) is supported at the lower point by the second part (102) of the support (10).

2. The lateral guide device as claimed in claim 1, wherein, when the first part (101) of the support (10) is brought into a retracted position in which it does not support the roller (11), the roller (11) is able to pivot downward under the effect of gravity, while being supported at the lower point by the second part (102) of the support (10), and the retaining element (104) has the function of vertically retaining the roller (11) in said removal position when the roller (11) pivots downward.

3. The lateral guide device as claimed in any one of claims 1 to 2, wherein, when the first part (101) of the support (10) is in said retracted position, the roller (11) is completely axially accessible, and preferably is able to be axially removed from the second part (102) of the support (10).

4. The lateral guide device as claimed in any one of claims 1 to 3, wherein the support (10) comprises a rotatable hinge (105) that makes it possible for the first part (101) of the support (10) to pivot between said operational position and said retracted position, and preferably wherein the hinge (105) allows the first part (101) of the support to pivot over an angular range of at least 60°.

5. The lateral guide device as claimed in any one of claims 1 to 4, wherein the retaining element (104) is positioned under the roller (11) when the latter is mounted on the support (10) and/or wherein the retaining element (104) is inclined upward from its end closest to the second part (102), and preferably has substantially the same inclination as the roller (11) mounted on its support and/or wherein the retaining element (104) is also able to laterally hold the guide roller in its removal position.

6. The lateral guide device as claimed in any one of claims 1 to 5, wherein the retaining element comprises a retaining wall (104a) which is positioned under the roller (11) when the latter is mounted on the support (10), and preferably wherein the retaining element (104) comprises two lateral holding walls (104b) which form, together with the retaining wall (104a), a trough for retaining and laterally holding the roller (11) in its removal position.

7. The lateral guide device as claimed in any one of claims 1 to 6, wherein, in its removal position, the roller (11) is held inclined upward from its lower point and/or wherein the lower and upper points of the support (10) define a support axis, and the angle (α) of downward tilting of the roller (11) in its removal position relative to this support axis is strictly greater than 0° and less than or equal to 45°, and preferably between 5° and 20°.

8. The lateral guide device as claimed in any one of claims 1 to 7, the device comprising at least one entry point (P) protection element which is attached to a fixed part of the support, preferably removably, and which prevents access to the roller (11) from at least one of its two main sides, said entry point protection element preferably comprising a rectangular plate (108) of which the width is greater than the diameter of the roller (11) and of which the length is greater than the length of the roller (11).

9. A lateral guide device (1A/1B) for laterally guiding an endless conveyor belt (B) of a trough conveyor, the device comprising a support (10) and an idle guide roller (11) which is able to be mounted in a removable manner on the support (10) between a first part (101) that makes it possible to support, in an operational position, a first end (111) of the axle of the roller (11) at an upper point and a second part (102) that makes it possible to support a second end (111) of the axle of the roller (11) at a lower point, wherein the first part (101) of the support is movable between said operational position and a retracted position in which the first part (101) of the support (10) is completely disengaged from the end (111) of the axle of the roller (11), and the lateral guide device comprises a locking means (13) which makes it possible to lock the first part (101) of the support (10) in said operational position, **characterized in that** the support (10) comprises a fixed bearing element (106) and the locking means (13) makes it possible to clamp the first part (101) against this fixed bearing element (106), and **in that** the fixed bearing element (106) comprises a centering element (106b) which is able to cooperate with a complementary centering element (101e) of the first part (101) of the support so as to center the first part (101) when it is brought into said operational position and is locked by being clamped against the fixed bearing element (106).

10. The lateral guide device as claimed in claim 9, wherein the bearing element comprises a bearing plate (106), a bearing edge (106a) of which comprises a male centering element (106b), and wherein the first part (101) of the support (10) comprises a centering through-opening which is preferably oblong in shape (101e) and which is dimensioned and oriented relative to the male centering element (106b) such that, when the first part (101) of the support (10) moves from its retracted position into its operational position, this centering opening (101e) is positioned facing the male centering element (106b) and the male centering element (106b) passes through the centering opening (101e), thereby guiding and centering the first part (101) of the support (10) into its operational position bearing on the bearing edge (106a) of the bearing plate (106).

11. A lateral guide assembly (E) for laterally guiding an endless conveyor belt (B) of a trough conveyor (C), which assembly defines a central conveying axis (A2) and comprises at least one pair of lateral guide devices (1A/1B), wherein at least a first device (1A) is a lateral guide device as claimed in any one of claims 1 to 10 and the second lateral guide device (1B) might or might not be a device as claimed in any one of claims 1 to 10, wherein said first and second lateral guide devices are positioned on either side of the central conveying axis (A2), at a distance from one another, the lower point of the support (10) of the first device (1A) being closer to this central conveying axis (A2) than the upper point of its support (10).

12. A trough conveyor (C) comprising a conveyor belt (B), which is deformable so as to form a trough, and one or more lateral guide devices as claimed in any one of claims 1 to 10 or one or more lateral guide assemblies as claimed in claim 11.

13. A method for removing an idle guide roller (11) from a lateral guide device (1A or 1B) of any one of claims 1 to 8, which roller is mounted in contact with the carrying run of a trough-shaped conveyor belt (B) of a trough conveyor (C), the carrying run exerting pressure on the idle guide roller (11) and being locally deformed or kept locally deformed by said roller (11), said method comprising the following consecutive steps:
a. the first part (101) of the support (10) is unlocked;
b. this first part (101) is retracted so as to release the end (111) of the axle of the roller (11) at the upper point, such that the roller (11) remains supported at its other end at the lower point of the support (10) and is held vertically by the retaining element (104) of the support (10) in a removal position;
c. the roller (11) is removed from its support, preferably by pulling it in its axial direction in order to completely disengage its end (111) at the lower point from the second part (102) of the support
and preferably wherein, in step (b), the roller (11) pivots downward under the effect of gravity until it is held vertically by the retaining element (104) of the support (10) in said removal position.

14. A method for mounting an idle guide roller of a lateral guide device of any one of claims 1 to 8, the support (10) of which is already mounted in a trough conveyor comprising a trough-shaped conveyor belt (B) which is deformable so as to form a trough or be kept as a trough, said method comprising the following consecutive steps:
a. with the first part (101) of the support retracted, the roller is positioned relative to the support (10) and moved so as to position one end (111) of the axle of the roller (11) on the second part (102) of the support (10) so that it is supported at a lower point, the roller (11) being retained vertically by the retaining element (104) of the support (10);
b. the roller (11) is lifted by pivoting it upward so as to bring it into contact with the carrying run of the conveyor belt (B);
c. the first part (101) of the support (10) is brought into its operational position and it is locked in this position;
d. the other end (111) of the axle of the roller (11) is positioned on the second part (102) of the support (10) so that it is supported at an upper point of the support (10)
and preferably wherein, in step (b), the roller (11) is pivoted upward using a lever and by using the retaining element (104) as the fulcrum of this lever.

15. The use of the trough conveyor as claimed in claim 12 for bulk conveying.
